# EUROPÄISCHE PATENTSCHRIFT

(11) **EP 2 831 968 B1**
(45) Veröffentlichungstag und Bekanntmachung des Hinweises auf die Patenterteilung: **06.07.2016**
(21) Anmeldenummer: 13707368.0
(22) Anmeldetag: 01.03.2013
(51) Int. Cl.: H01T 1/12, H01T 1/14, H02H 5/04

(54) **DEFEKTANZEIGE FÜR EINE ELEKTRONISCHE EINRICHTUNG, INSBESONDERE ÜBERSPANNUNGSABLEITER**
DEFECT INDICATOR FOR AN ELECTRONIC DEVICE, IN PARTICULAR SURGE ARRESTER
INDICATEUR DE DÉFAUT POUR DISPOSITIF ÉLECTRONIQUE, EN PARTICULIER PARAFOUDRE

(30) Priorität: 26.03.2012 DE 102012006102; 04.06.2012 DE 102012011072
(43) Veröffentlichungstag der Anmeldung: 04.02.2015
(73) Patentinhaber: Dehn + Söhne GmbH + Co. KG, 92318 Neumarkt/Opf. (DE)
(72) Erfinder: KRAUSS, Bernhard, 92348 Berg (DE); HIERL, Stephan, 92318 Neumarkt (DE); EICHENSEER, Roland, 92318 Neumarkt (DE)
(74) Vertreter: Kruspig, Volkmar
(86) Internationale Anmeldenummer: PCT/EP2013/054149
(87) Internationale Veröffentlichungsnummer: WO 2013/143802

(56) Entgegenhaltungen:
- EP-A1- 0 239 525
- DE-A1-102007 042 991
- DE-A1-102009 022 069

## Beschreibung

Die Erfindung betrifft eine Defektanzeige für eine elektronische Einrichtung, insbesondere Überspannungsableiter, umfassend mindestens zwei auf verschiedene Fehler- oder Überlastzustände ansprechende, thermische Überstromschutzeinrichtungen, diese jeweils eine mechanische Betätigungseinrichtung zum Auslösen der Fehlersignalisierung aufweisend, wobei die mechanische Betätigungseinrichtung als Bolzen oder Stift ausgebildet ist, welcher auf ein Fehlersignalisierungselement einwirkt, gemäß Patentanspruch 1.

Aus der DE 10 2006 000 919.3 ist ein steckbarer Überspannungsableiter mit einem oder mehreren Überspannungsschutzelementen vorbekannt. Die Überspannungsschutzelemente sind in einer baulichen Einheit mit einer optischen Defektanzeige angeordnet. Weiterhin ist eine thermische Überstromschutzeinrichtung vorgesehen, welche eine mechanische Betätigungseinrichtung zum Auslösen eines Fernmeldekontakts zur Fehlersignalisierung umfasst.

Gemäß Aufgabe dieses zitierten Standes der Technik soll eine sichere Auslösung des Fernmeldekontakts zur Fehlersignalisierung erfolgen, wobei eine neuartige Konstruktion zu schaffen ist, die von festen Toleranzketten ausgeht, so dass ein fehlerhaftes Auslösen vorzugsweise eingesetzter Mikroschalter als Fernmeldekontakt vermieden werden kann. Die vorgestellte Konstruktion soll nachteilige Wippbewegungen vermeiden und ausschließlich auf Schiebebewegungen, senkrecht zur Steckrichtung des Ableiters orientieren. Diesbezüglich ist ein quer zur Steckrichtung des Ableiters beweglicher, geradlinig geführter Schieber vorgesehen, welcher eine elastische Zunge als Sperre aufweist. Das freie Ende der elastischen Zunge wird von einem Verriegelungselement blockiert. Die thermische Überstromschutzeinrichtung umfasst einen Betätigungsbolzen, welcher im Auslösefall auf das freie Ende der Zunge einwirkt, um dieses freie Ende aus der Blockierposition herauszubewegen. Der Schieber weist einen freien, stegförmigen Abschnitt auf, weicher eine diesbezügliche Öffnung im Ableitergehäuse durchdringt. Wenn der Betätigungsbolzen auf das freie Ende der Zunge einwirkt, wird der Schieber freigegeben und kann eine Längsverschiebung ausführen. Gemäß dortiger bevorzugter Ausgestaltung besitzt die thermische Überstromschutzeinrichtung eine Zylinderform mit einem integrierten, federvorgespannten Betätigungsbolzen. Die Schwenkrichtung des freien Endes der vorerwähnten Zunge und die Richtung der Bewegung des Betätigungsschlagbolzens der thermischen Überstromschutzeinrichtung liegen auf einer Achse, d.h. die beiden Richtungen fallen im Wesentlichen zusammen.

In einer Ausgestaltung des Schiebers kann die Anzeigefläche desselben eine Farbmarkierung umfassen oder durchgefärbt sein, wobei eine Kappe zur Abdeckung des Überspannungsableiters an ihrer Oberseite ein Sichtfenster als Teil der optischen Defektanzeige umfasst.

Mit der zitierten Lehre nach DE 10 2006 000 919.3 wird zwar in einfacher Weise eine mechanische Betätigungseinrichtung unter Rückgriff auf eine Schlagbolzen-Sicherung geschaffen, die eine optische Anzeige bzw. eine Fernmeldeeinrichtung sicher auslösen kann. Wenn jedoch mehrere hinsichtlich ihres Betriebsverhaltens zu überwachende Elemente im Überspannungsableiter vorhanden sind, bedarf es mehrerer Schieber mit Zunge und einem zugeordneten Betätigungsmechanismus, was zu einer mechanisch und konstruktiv sehr aufwendigen Lösung führt.

Aus der DE 10 2009 022 069 A1 ist ein Überspannungsableiter mit mindestens einem Ableitelement vorbekannt, wobei weiterhin eine lotfixierte thermische Trennstelle vorhanden ist, die mit dem Ableitelement in Verbindung steht. Weiterhin ist eine Schadensanzeigeeinrichtung zur Darstellung des Fehlerzustands vorhanden, wobei die Schadensanzeigeeinrichtung ergänzend den Zustand einer thermischen Abschaltvorrichtung, insbesondere Sicherung, abfragt und die möglichen Fehlerzustände des Ableitelements und der Abschaltvorrichtung mechanisch in einer ODER-Verknüpfung in geeigneter optischen Weise präsentiert. Die thermische Abschaltvorrichtung umfasst ein bewegliches Bauteil, welches von einem Kennmelderdraht fixiert und nach Schmelzen bzw. Zerstören dieses Drahtes freigegeben wird.

Mit dieser Lehre soll die Aufgabe gelöst werden, mit wenigen Bauteilen eine Schadensanzeige für alle denkbaren Fehlerzustände bereitzustellen. Hierfür ist am oder im Gehäuse des Ableiters ein Führungsteil für eine Druckfeder oder dergleichen Kraftspeicher vorgesehen. Ein erstes Federende wirkt unmittelbar oder mittelbar über einen Abtrennstempel oder Abtrennzylinder auf die thermische Trennstelle und ein zweites, dem ersten Ende gegenüberliegendes Federende des Kraftspeichers wirkt unmittelbar oder mittelbar über einen Führungsring auf einen Schieber ein.

Der Schieber ist an einer ersten Seite unmittelbar von einer weiteren Feder in Verschieberichtung oder mittelbar über die Schadensanzeigeeinrichtung mit einer Kraft beaufschlagt. Die der ersten Seite gegenüberliegende zweite Seite des Schiebers steht mit dem beweglichen Bauteil der thermischen Abschaltvorrichtung derart in Wirkverbindung, dass unter Krafteinwirkung der Druckfeder der Freigabebewegung des beweglichen Bauteils gefolgt werden kann.

Die zweite Seite des vorbekannten Schiebers ist derart ausgebildet, dass eine Schieberlängsbewegung durch die Kraft der weiteren Feder bei ausgelöster thermischer Trennstelle und fixiertem Bauteil der thermischen Abschaltvorrichtung sowie unveränderter Position zwischen Schieber und Führungsteil und weiterhin eine Hubbewegung bezogen auf das Führungsteil mit anschließender Schieberlängsbewegung bei freigegebenem Kennmelderdraht nebst dem beweglichen Bauteil der thermischen Abschaltvorrichtung erfolgen kann. Das zweite Ende der Feder oder mindestens ein Teil des Führungsrings greift in eine Aussparung oder eine Vertiefung im Schieber ein, um diesen und die Schadensanzeigeeinrichtung im ordnungsgemäßen Zustand des Ableiters zu verriegeln. Ausgestaltend weist das Führungsteil einen inneren zylindrischen Bereich zur Aufnahme der Druckfeder und mindestens eines Abschnitts des Abtrennstempels oder Abtrennzylinders auf. Das Führungsteil kann integraler Bestandteil des Gehäuses sein. Die Schadensanzeigeeinrichtung kann verschwenkbeweglich ausgebildet werden und wird an einem dem Gehäuse zugehörigen Lagerzapfen geführt. Die Schadensanzeige umfasst weiterhin einen Flächenabschnitt, der mit einer Signalfarbe versehen ist. Durch eine Bewegung der Schadensanzeigeeinrichtung innerhalb eines Fensterabschnitts der Gehäusekappe kann dann visuell eine Farbveränderung festgestellt und ein möglicher Fehlerzustand von z.B. Grün auf Rot ermittelt werden. Ergänzend kann die Schadensanzeigeeinrichtung an einem ihrer schwenkbeweglichen Enden einen Fortsatz oder einen Hebelarm aufweisen, der dem Auslösen einer Fernmeldeanzeige dient.

Die thermische Ableitvorrichtung ist als zylinderförmige Sicherung mit zwei gegenüberliegenden Kappen ausgebildet, wobei an einer der Kappen das mit dem Kennmelderdraht fixierte, bewegliche Bauteil angeordnet ist.

Gemäß dem oben geschilderten Stand der Technik liegt eine funktionale Trennung der Kraftspeicherfunktion für die thermische Trennstelle und für das bewegliche Bauteil der Abschaltvorrichtung einerseits und für die Bewegung der Schadensanzeigeeinrichtung andererseits vor. Damit können beide Baugruppen getrennt überwacht werden, wozu es allerdings einer Kopplung verschiedener mechanischer Elemente mit insgesamt sehr kompliziertem Aufbau bedarf.

Die Überstromschutzeinrichtung für den Einsatz in Überspannungsschutzgeräten mit zusätzlichem mechanischen Auslöser, bevorzugt als Schlagbolzen ausgeführt, gemäß DE 10 2006 034 404 A1 weist eine erste Funktionseinheit auf, die neben dem mechanischen Auslöser ein erstes Schmelzelement aufweist. Eine zweite Funktionseinheit ist als Überlastschutz ausgeführt und besitzt ein zweites Schmelzelement. Jede Funktionseinheit ist in einem Gehäuse angeordnet, wobei am jeweiligen Gehäuse seitliche, gegenüberliegende Abschlusskappen befindlich sind und die Schmelzleiter oder Schmelzelemente sich jeweils im Gehäuseinneren befinden und an den Anschlusskappen elektrisch kontaktiert werden. Die erste und die zweite Funktionseinheit sind elektrisch parallel geschaltet und diese Parallelschaltung wird mit dem eigentlichen Überspannungsschutzgerät in Reihe verschaltet. Die Funktionseinheiten bilden einen gemeinsamen mechanischen Verbund. An einer Abschlusskappe der ersten Funktionseinheit ist eine Kammer zur Aufnahme eines federvorgespannten Schlagbolzens angeordnet, wobei der Schlagbolzen vom ersten Schmelzelement in seiner Ruhestellung gehalten ist. Das erste Schmelzelement besteht aus einem Draht, welcher eine hohe Zugfestigkeit und einen I²t-Wert besitzt, der deutlich kleiner als derjenige des Materials des zweiten Schmelzelements ist.

Die bekannte Überstromschutzeinrichtung weist eine hohe alterungsstabile Impulsstromtragfähigkeit, eine mechanisch Anzeigefunktion bzw. eine Unterstützung einer derartigen Anzeige- und Signalfunktion sowie ein hohes Schaltvermögen auf. Der Schlagbolzen kann zur mechanischen Auslösung einer optischen und/oder elektrischen Anzeige dienen.

Aus dem Vorgenannten ist es Aufgabe der Erfindung, eine weiterentwickelte Defektanzeige für eine elektronische Einrichtung, insbesondere Überspannungsableiter, umfassend mindestens zwei auf verschiedene Fehler- oder Überlastzustände ansprechende, thermische Überstromschutzeinrichtungen anzugeben, welche in der Lage ist, verschiedene Auslösekriterien, vorzugsweise Sicherungselemente mit Kennmeldern, auf ein einziges anzeigendes Element, z.B. eine Fernmeldeanzeige, als ODER-Verknüpfung darzustellen und weiterhin die Möglichkeit einer exakteren und einfacheren Schadensbestimmung bezüglich der einzelnen Überstromschutzeinrichtungen bzw. Sicherungselemente zu schaffen.

Die Lösung der Aufgabe der Erfindung erfolgt durch die Merkmalskombination gemäß der Lehre des Patentanspruchs 1, wobei die Unteransprüche mindestens zweckmäßige Ausgestaltungen und Weiterbildungen umfassen.

Es wird demnach von einer Defektanzeige für eine elektronische Einrichtung, insbesondere Überspannungsableiter, ausgegangen, umfassend mindestens zwei auf verschiedene Fehler- oder Überlastzustände ansprechende, thermische Überstromschutzeinrichtungen, diese bevorzugt ausgebildet als Sicherungselemente mit interner Kennmelderfunktion. Die Überstromschutzeinrichtungen weisen jeweils eine mechanische Betätigungseinrichtung zum Auslösen der Fehlersignalisierung auf, wobei die mechanische Betätigungseinrichtung als Bolzen oder Stift ausgebildet ist, welcher auf ein Fehlersignalisierungselement einwirkt. Dieses Fehlersignalisierungselement kann ein farblich gekennzeichneter Schieber oder ein sonstiges optischen Anzeigeelement, aber auch eine elektrische Schalteinrichtung bzw. ein auf einem Optokoppler wirkendes Mittel sein.

Erfindungsgemäß sind die mindestens zwei, vom Grundsatz her jedoch beliebig vielen Überstromschutzeinrichtungen derart relativ zueinander angeordnet, dass sich die Richtungsvektoren der Bolzen oder Stifte in einer gedachten Verlängerung ihres Bewegungswegs schneiden.

Der jeweilige Bolzen oder Stift wirkt auf eine jeweils vorgesehene Flächenseite eines verschieblichen Ankers ein, wobei der Anker eine veränderbare Position im Bewegungsweg innehat. Der Anker ist hierbei als ein konstruktiv ausgebildeter flächiger Körper zu verstehen, der in der Lage ist, die mechanische Bewegungskraft des jeweiligen Bolzens oder Stiftes aufzunehmen, zu übertragen und gegebenenfalls für eine Bewegungsrichtungsumkehr Sorge zu tragen. Weiterhin kann der Anker selbst mit Blick auf seine nach Einwirkung des Bolzens oder Stiftes veränderte Lage zur Ausbildung einer Anzeige genutzt werden.

Der Anker besitzt eine weitere Flächenseite, die ihrerseits bei einer Ankerbewegung auf das Fehlersignalisierungselement einwirkt. Hierfür umfasst diese weitere Flächenseite mindestens eine Keilschräge, um eine Änderung der Kraftrichtung aufgrund der Bewegung eines der Bolzen oder Stifte der ausgelösten Überstromschutzeinrichtung zu erreichen.

Die Ankerbewegung wird entweder als Verschiebe-, d.h. lineare Bewegung, oder als Verschwenkbewegung bzw. Drehbewegung vollzogen.

Die Überstromschutzeinrichtungen sind bevorzugt so angeordnet, dass die mechanischen Betätigungseinrichtungen im Wesentlichen senkrecht zueinander orientiert sind.

Am Anker kann ausgestaltend ein Hebelarm ausgebildet sein, um eine Anker-Verschiebebewegung in eine Verschwenkbewegung zu wandeln, so dass eine Schalteinrichtung betätigbar ist.

Der Anker kann bei einer bevorzugten Ausführungsform an seiner weiteren Flächenseite zwei entgegengesetzte Keilschrägen aufweisen, so dass sich eine Aussparung ähnlich eines Kegelstumpfes bildet. Die entgegengesetzt orientierten Keilschrägen treten mit dem Fehlersignalisierungselement in Wechselwirkung, wobei das Fehlersignalisierungselement in seiner Bewegungsrichtung geführt gelagert ist und zwei komplementäre Keilschrägen besitzt. Wird in einer solchen Ausführungsform der Anker seitlich verschoben, erfolgt eine Bewegungsrichtungswandlung hinsichtlich des Fehlersignalisierungselements, das seine Lage senkrecht zur seitlichen Verschiebebewegung des Ankers verändert.

Der Anker kann aber auch als Pendelkörper ausgeführt werden und dabei sowohl in seiner Pendelrichtung als auch senkrecht hierzu beweglich sein, um die Fehlersignalisierung zu bewirken bzw. auszulösen.

Bei einer Ausgestaltung besitzt der Anker auf einer bezogen auf die Einwirkung der Bolzen oder Stifte bzw. des Fehlersignalisierungselements betätigungsfreien Oberflächenseite Markierungen, welche in einem Fenster der elektronischen Einrichtung je nach ausgeführter Ankerbewegung nach Auslösen einer der Überstromschutzeinrichtungen sichtbar oder nicht sichtbar sind, so dass eine genaue Schadensbestimmung bezüglich der jeweiligen ausgefallenen Überstromschutzeinrichtung erfolgen kann.

Der Anker ist durch die vorerwähnten komplementären Keilschrägen des Fehlersignalisierungselements in einer vorgegebenen Position gehalten, wobei hierfür das Fehlersignalisierungselement unter mechanischer Vorspannung steht.

Erfindungsgemäß ist darüber hinaus die Verwendung der vorstehend erläuterten Defektanzeige insbesondere bei mehrpoligen Überspannungsschutzgeräten.

Die Erfindung soll nachstehend anhand eines Ausführungsbeispiels sowie unter Zuhilfenahme von Figuren näher erläutert werden.

Hierbei zeigen:
- Fig. 1: eine prinzipielle Darstellung der Defektanzeige mit Anker und insgesamt drei thermischen Überstromschutzeinrichtungen, weiche jeweils eine mechanische Betätigungseinrichtung zum Auslösen der Fehlersignalisierung aufweisen, wobei der Anker die entsprechende Bewegung der Bolzen der Überstromschutzeinrichtungen auf ein Fehlersignalisierungselement überträgt;
- Fig. 2 bis 4: Detaildarstellungen der Bewegungslage bzw. Bewegungsveränderung des Ankers sowie nach aktivierter Überstromschutzeinrichtung, z.B. ausgeführt als Kennmelder 1 bis 3;
- Fig. 5: eine perspektivische Prinzipdarstellung der Ausbildung des Ankers mit angekoppeltem Hebelarm zur Bildung einer Drehachse;
- Fig. 6: eine perspektivische Darstellung ähnlich der Ansicht nach Fig. 1 mit angedeuteten linearen Bewegungsrichtungen des Ankers und
- Fig. 7: eine beispielhafte konstruktiv umgesetzte Lösung eines Ankers, welcher eine Pendelbewegung ausführt und wobei zusätzlich senkrecht zum Pendelhub eine Ankerbewegung erfolgen kann, um im Wesentlichen senkrecht zueinander orientierte Überstromschutzeinrichtungen hinsichtlich ihres Funktionszustands zu überwachen und einen möglichen Ausfall an ein gemeinsames Anzeigeelement weiterzuleiten.

Der sich in den Ausführungsbeispielen wiederfindende Grundgedanke der Erfindung geht von der Vereinigung mehrerer, mindestens zweier, relativ zueinander angeordneter Überstromschutzeinrichtungen, z.B. ausgebildet als Sicherungselemente mit Kennmelder, aus, die auf eine gemeinsame Anzeige über eine ODER-Verknüpfung einwirken.

Der in den Figuren gezeigte Anker wird durch eine Krafteinwirkung insbesondere derjenigen des Schlagbolzens des Kennmelders in seiner Position verschoben.

Durch die geometrische Ausführung des Ankerkörpers ist es dabei vom Prinzip her unerheblich, welcher Kennmelder dabei in seiner Position verschoben wird.

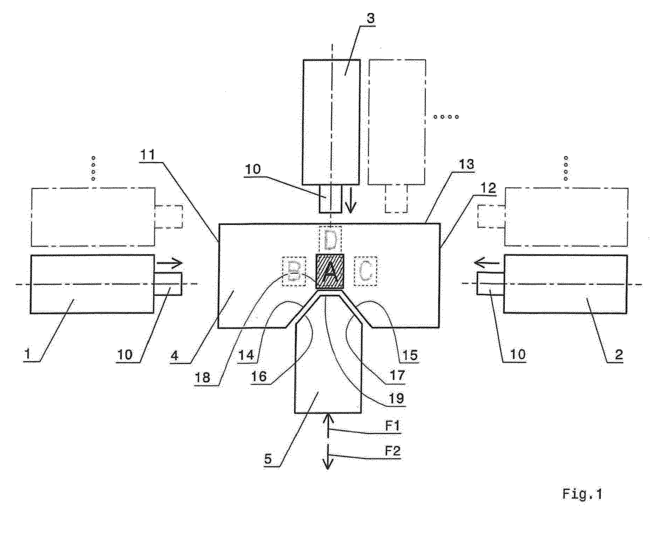

Betrachtet man zunächst die Fig. 1, dann ist eine prinzipielle Draufsicht der erfindungsgemäßen Lösung gezeigt. Ein Anker 4 ist ein linear verschieblicher Flächenkörper. Insgesamt drei Kennmelder 1 bis 3 sind um den Anker 4 herum angeordnet. Die jeweilige Betätigungseinrichtung des jeweiligen Kennmelders 1 bis 3, ausgebildet als Bolzen 10, wirkt auf eine jeweils vorgesehene Flächenseite des verschieblichen Ankers 4 ein. So wirkt der Kennmelder 1 auf die Flächenseite 11, der Kennmelder 2 auf die Flächenseite 12 und der Kennmelder 3 auf die Flächenseite 13 des Ankers 4 ein.

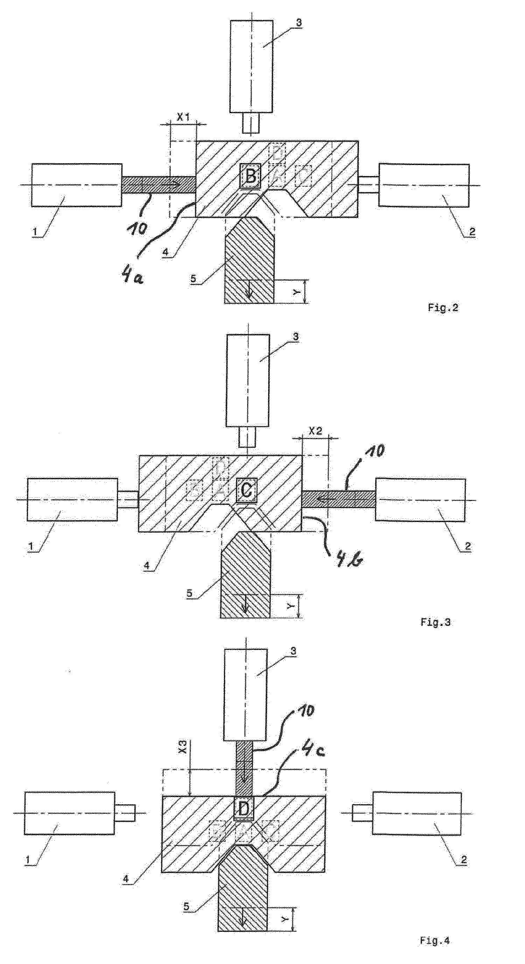

Mit den Großbuchstaben A bis D sind Markierungen als Statusanzeige 6 gezeigt, wobei im mittleren Bereich (A) ein Sichtfenster vorhanden ist. Eine Verschiebebewegung des Ankers 4 (siehe Fig. 2 bis 4) ist dann über das Sichtfenster und die erkennbare Signalisierungsgestaltung nachvollziehbar. Über die ersichtlichen Buchstaben (z.B. B nach Fig. 2) ist ermittelbar, dass in diesem Fall der Kennmelder 1 ausgelöst hat.

Der Anker 4 weist bei den Ausführungsformen gemäß Fig. 1 bis 6 zwei gegenüberliegende Keilflächen 14 und 15 auf, die insgesamt zu einer kegelstumpfförmigen Ausformung im Anker 4 führen.

Das Fehlersignalisierungselement 5, z.B. ausgebildet als Anzeige oder Schalter, besitzt komplementäre Keilschrägen 16 und 17. Eine Verschiebebewegung des Ankers (siehe Fig. 2 und 3) führt auch zu einer Positionsänderung des Fehlersignalisierungselements 5.

Das Fehlersignalisierungselement 5 kann mit einer Kraft F1 vorgespannt werden, wobei die Kraft F2 größer als die Kraft F1 ist und aus den aktivierten mechanischen Betätigungseinrichtungen abgeleitet ist.

Das Fehlersignalisierungselement 5 ist bezüglich der Bewegungsrichtung entlang der Kraftvektoren F1 und F2 verschiebebeweglich geführt.

Wird, wie in Fig. 2 dargestellt, der Kennmelder 1 ausgelöst, wird die Auslösekraft des Bolzens 10 über die Fläche 4a auf den Anker 4 übertragen, der dann um das Maß x1 linear bewegt wird. Über die in einem bestimmten Winkel angeordnete Schräge (Keilfläche) 14 (siehe Fig. 1) erfolgt eine Kraftübertragung auf das Element 5 (Fläche 16, Fig. 1), welches dann um das Maß Y einer Linearbewegung unterliegt.

Wird der Kennmelder 2 nach Fig. 3 ausgelöst, wird über die Fläche 4b die Kraft auf den Anker 4 übertragen, der dann um das Maß x2 bewegt wird. Über die Keilschräge 15 (siehe Fig. 1) erfolgt dann eine Bewegungs- und Kraftübertragung auf das Element 5 (Fläche 17, siehe Fig. 1), welches wiederum um das Maß Y verschoben wird.

Gemäß Fig. 4 wird der Kennmelder 3 ausgelöst. Über die Fläche 4c wird die entsprechende Auslösekraft auf den Anker 4 übertragen, der hierdurch um das Maß x3 bewegt wird. Über den Anker 4 erfolgt eine Weiterleitung der Bewegungskraft unter Mitnahme des Ankers (Maß x3) auf das Element 5 (Fläche 19, siehe Fig. 1), das um die Strecke Y verschoben wird.

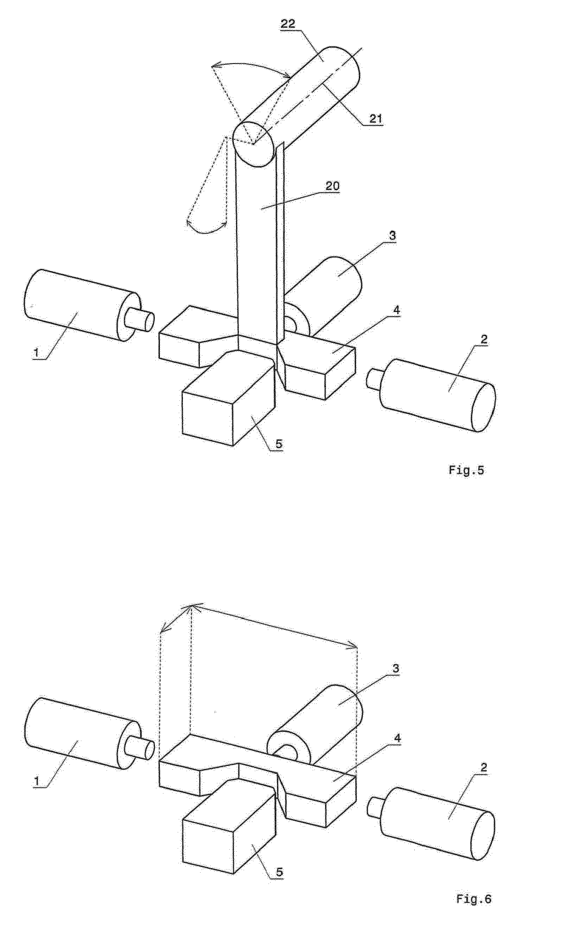

Der Anker 4 kann gemäß den Darstellungen nach Fig. 5 und 6 sowohl linear gelagert werden (Fig. 6) als auch einer drehbaren Lagerung (Fig. 5) unterliegen. Dabei besteht die Möglichkeit, über den Hebelarm 20 aus einer Verschiebebewegung des Ankers 4 eine Verschwenkbewegung zu erzeugen, und zwar bezüglich der Drehachse 21, so dass sich eine drehende Bewegung für eine Schalt- oder Anzeigeeinrichtung 22 ergibt.

Ebenso kann aber auch der Hebelarm 20 aus der Bildebene nach vorn gekippt werden, um das Fehlersignalisierungselement 5 zu aktivieren. Hierfür kann auf ein Filmscharnier oder eine flexible Ausführung des Hebelarms zurückgegriffen werden.

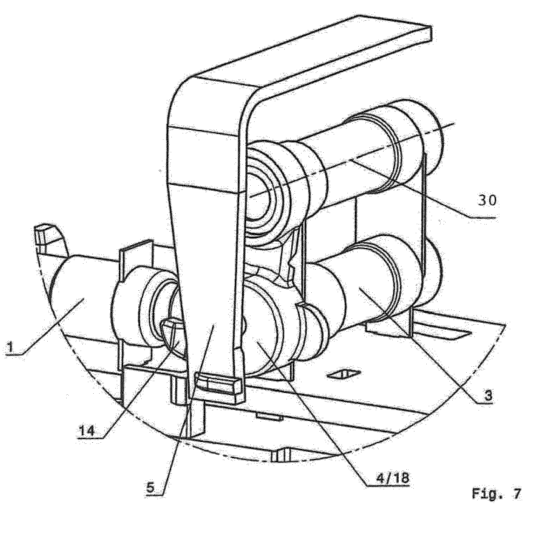

Eine Ausführungsform im Sinne einer Pendelbewegung mit Auslenkung des Ankers 4 auf senkrecht zur Pendelhubrichtung ist in einer technisch konstruktiven Umsetzung gemäß der Darstellung nach Fig. 7 gezeigt.

Gemäß Fig. 6 wird von einer linearen Verschiebebewegung des Ankers 4 entlang der angedeuteten Pfeildarstellungen ausgegangen. Der Anker 4 kann hier gleichzeitig als Anzeige ausgeführt sein oder in Wirkverbindung mit einem Anzeigeelement gemäß dem eingangs geschilderten Stand der Technik stehen.

Aus den Darstellungen wird deutlich, dass prinzipiell die Anzahl der Kennmeldeelemente, d.h. der Überspannungsschutzeinrichtungen, unbegrenzt ist. Durch eine Verlängerung der Flächen 4a bis 4c bzw. 11 bis 13 gemäß Fig. 1 kann eine große Anzahl von Kennmeldern angeordnet werden, die jeweils in identischer Weise auf den Anker wirken.

Der Anker kann auch auf eine elektrische Fernmeldeeinheit z.B. ausgebildet als Mikroschalter, einwirken und zusätzlich mit einem Sichtfenster in Wechselwirkung stehen im Sinne einer Anzeige aktiver, d.h. ausgelöster Überstromschutzeinrichtungen, symbolisiert durch die Großbuchstaben A bis D.

Es besteht also die Möglichkeit darzustellen, welcher Kennmelder bzw. weiche Überstromschutzeinrichtung ausgelöst hat. Damit ist eine Statusanzeige einzelner Pfade bei mehrpoligen Überspannungsschutzgeräten möglich, wobei diese Statusanzeige als Fernmeldung, aber auch gleichzeitig direkt am Gerät optisch darstellbar ist.

Alternativ kann unter Rückgriff auf das erfindungsgemäß geschilderte Prinzip auch eine stufenweise Vorschädigung eines Überspannungsschutzgeräts angezeigt werden. Hier sind auch im Vergleich zum Stand der Technik nicht nur zwei- oder dreistufige, sondern vierstufige Anzeigen realisierbar.

Die Fig. 7 zeigt eine beispielhafte konstruktiv umgesetzte Lösung unter Rückgriff auf einen Anker, welcher eine Pendelbewegung ausführen kann. Zusätzlich besteht die Möglichkeit, senkrecht zum Pendelhub eine Ankerbewegung auszuführen, um senkrecht zueinander orientierte Überstromschutzeinrichtungen hinsichtlich ihres Funktionszustands zu überwachen und einen möglichen Ausfall an ein gemeinsames Anzeigeelement weiterzuleiten. Die Überstromschutzeinrichtungen sind in der Fig. 7 mit den Bezugszeichen 3 und 30 bezeichnet. Für die übrigen dargestellten Teile in Fig. 7 wurden Bezugszeichen verwendet, die den Funktionselementen gemäß den voranstehend geschilderten Ausführungsbeispielen entsprechen.

## Patentansprüche

1. Defektanzeige für eine elektronische Einrichtung, insbesondere Überspannungsableiter, umfassend mindestens zwei auf verschiedene Fehler- oder Überlastzustände ansprechende, thermische Überstromschutzeinrichtungen (1; 2; 3), diese jeweils eine mechanische Betätigungseinrichtung zum Auslösen der Fehlersignalisierung aufweisend, wobei die mechanische Betätigungseinrichtung als Bolzen (10) oder Stift ausgebildet ist, welcher auf ein Fehlersignalisierungselement (5) einwirkt,
**dadurch gekennzeichnet, dass**
die mindestens zwei Überstromschutzeinrichtungen (1; 3) derart relativ zueinander angeordnet sind, dass sich die Richtungsvektoren der Bolzen (10) oder Stifte in einer gedachten Verlängerung ihres Bewegungswegs schneiden, wobei der jeweilige Bolzen (10) oder Stift auf eine jeweils vorgesehene Flächenseite eines verschwenkbaren oder verschieblichen Ankers (4) einwirkt und der Anker (4) eine veränderbare Position im Bewegungsweg innehat, sich jedoch auch im Schnittpunkt der gedachten Verlängerung der Bewegungswege der Bolzen (10) oder Stifte befindet,
weiterhin der Anker (4) eine weitere Flächenseite besitzt, die ihrerseits bei einer Ankerbewegung auf das Fehlersignalisierungselement (5) einwirkt und hierfür diese weitere Flächenseite mindestens eine Keilschräge (14; 15) umfasst, um eine Änderung der Kraftrichtung aufgrund der Bewegung eines der Bolzen (10) oder Stifte zu erreichen.

2. Defektanzeige nach Anspruch 1,
**dadurch gekennzeichnet, dass**
die Überstromschutzeinrichtungen (1; 2; 3) so angeordnet sind, dass die jeweils benachbarten mechanischen Betätigungseinrichtungen im Wesentlichen senkrecht zueinander orientiert sind.

3. Defektanzeige nach einem der vorangegangenen Ansprüche,
**dadurch gekennzeichnet, dass**
am Anker (4) ein Hebelarm (20) ausgebildet ist, um eine Anker-Verschiebebewegung in eine Verschwenkbewegung zu wandeln, so dass eine Schalteinrichtung oder dergleichen Mittel betätigbar ist.

4. Defektanzeige nach einem der vorangegangenen Ansprüche,
**dadurch gekennzeichnet, dass**
der Anker (4) an seiner weiteren Flächenseite zwei entgegengesetzte Keilschrägen (14; 15) aufweist, welche mit dem Fehlersignalisierungselement (5) in Wechselwirkung treten, wobei das Fehlersignalisierungselement (5) in seiner Bewegungsrichtung geführt gelagert ist und zwei komplementäre Keilschrägen (16; 17) besitzt.

5. Defektanzeige nach einem der Ansprüche 1 bis 5,
**dadurch gekennzeichnet, dass**
der Anker(4) als Pendelkörper ausgeführt und sowohl in seiner Pendelrichtung als auch senkrecht hierzu beweglich ist.

6. Defektanzeige nach einem der vorangegangenen Ansprüche,
**dadurch gekennzeichnet, dass**
der Anker auf einer betätigungsfreien Oberflächenseite Markierungen besitzt, welche in einem Fenster der elektronischen Einrichtung je nach ausgeführter Ankerbewegung nach Auslösen einer der Überstromschutzeinrichtungen sichtbar sind, so dass eine genaue Schadensbestimmung bezüglich der jeweiligen Überstromschutzeinrichtung oder des Zustands der elektronischen Einrichtung erfolgen kann.

7. Defektanzeige nach Anspruch 5 oder 6,
**dadurch gekennzeichnet, dass**
der Anker (4) durch die komplementären Keilschrägen (16; 17) des Fehlersignalisierungselements (5) in einer vorgegebenen Position gehalten ist und hierfür das Fehlersignalisierungselement (5) unter mechanischer Vorspannung steht.

8. Defektanzeige nach einem der vorangegangenen Ansprüche, **gekennzeichnet durch** deren Verwendung bei mehrpoligen Überspannungsschutzgeräten.

## Claims

1. A defect indicator for an electronic device, in particular a surge arrester, comprising at least two thermal surge protection devices (1; 2; 3) which respond to different fault or overload states and each comprise a mechanical actuating device for triggering the fault signalling, wherein the mechanical actuating device is formed as a bolt (10) or pin which acts on a fault signalling element (5), **characterized in that** the at least two surge protection devices (1; 3) are arranged relative to one another in such a manner that the direction vectors of the bolts (10) or pins intersect in an imaginary extension of the movement path thereof, wherein the respective bolt (10) or pin acts on a respectively provided surface side of a pivotable or displaceable armature (4), and the armature (4) occupies a variable position in the movement path, but is also situated in a point of intersection of the imaginary extension of the movement paths of the bolts (10) or pins, wherein further the armature (4) also comprises a further surface side which, in the event of an armature movement, in turn acts on the fault signalling element (5), and said further surface side comprises at least one wedge slope (14; 15) for this purpose in order to achieve a change in the direction of force on account of the movement of one of the bolts (10) or pins.

2. A defect indicator according to claim 1, **characterized in that** the surge protection devices (1; 2; 3) are arranged in such a way that the respectively adjoining mechanical actuating devices are oriented substantially perpendicularly with respect to each other.

3. A defect indicator according to one of the preceding claims, **characterized in that** a lever arm (20) is formed on the armature (4) in order to convert an armature displacement movement into a pivoting movement, so that a switching device or a similar means can be actuated.

4. A defect indicator according to one of the preceding claims, **characterized in that** the armature (4) comprises two opposite wedge slopes (14; 15) on its further surface side, said wedge slopes interacting with the fault signalling element (5), wherein the fault signalling element (5) is mounted in a guided manner in its direction of movement and comprises two complementary wedge slopes (16; 17).

5. A defect indicator according to one of the claims 1 to 5, **characterized in that** the armature (4) is formed as a pendulum body and is movable both in its pendulum direction and also perpendicularly thereto.

6. A defect indicator according to one of the preceding claims, **characterized in that** the armature comprises markings on its surface side free from actuation, which markings are visible in a window of the electronic device depending on the performed armature movement after the triggering of one of the surge protection devices, so that precise determination of damage can occur concerning the respective surge protection device or the state of the electronic device.

7. A defect indicator according to claim 5 or 6, **characterized in that** the armature (4) is held in a predetermined position by the complementary wedge slopes (16; 17) of the fault signalling element (5), and the fault signalling element (5) is under mechanical pretension for this purpose.

8. A defect indicator according to one of the preceding claims, **characterized by** its use in multipolar surge arresters.

## Revendications

1. Indicateur de défauts pour un système électronique, en particulier pour un dérivateur de surtensions, incluant au moins deux dispositifs thermiques de protection contre les surintensités (1 ; 2 ; 3) réagissant à des états différents d'erreur ou de surcharge, ces dispositifs comprenant respectivement un moyen d'actionnement mécanique pour déclencher la signalisation d'erreur, dans lequel le moyen d'actionnement mécanique est réalisé sous la forme de goujon (10) ou de tige, qui agit sur un élément de signalisation d'erreur (5),
**caractérisé en ce que**
lesdits au moins deux dispositifs de protection contre les surintensités (1 ; 3) sont agencés l'un par rapport à l'autre de telle manière que les vecteurs directionnels des goujons (10) ou des tiges se recoupent dans un prolongement imaginaire de leurs trajets de déglacement, dans lequel le goujon (10) ou la tige respectif/respective agit sur une surface latérale respectivement prévue sur un induit (4) capable de pivoter ou capable de translation, et l'induit (4) occupe une position variable dans le trajet de déplacement, mais se trouve également au point d'intersection du prolongement imaginaire des trajets de déplacement des goujons (10) ou des tiges,
l'induit (4) possède en outre une autre surface latérale qui agit de son côté sur l'élément de signalisation d'erreur (5) lors d'un mouvement de l'induit et cette autre surface latérale inclut à cet effet au moins une pente en coin (14 ; 15) afin d'atteindre une modification de la direction des forces en raison du déplacement de l'un des goujons (10) ou de l'une des tiges.

2. Indicateur de défauts selon la revendication 1,
**caractérisé en ce que** les dispositifs de protection contre les surintensités (1 ; 2 ; 3) sont agencés de telle façon que les moyens d'actionnement mécanique respectivement voisins sont orientés essentiellement perpendiculairement l'un à l'autre.

3. Indicateur de défauts selon l'une des revendications précédentes, **caractérisé en ce qu'**un bras de levier (20) est réalisé sur l'induit (4), afin de convertir un mouvement de translation de l'induit en un mouvement de pivotement, de sorte qu'un moyen de commutation ou un moyen similaire est susceptible d'être actionné.

4. Indicateur de défauts selon l'une des revendications précédentes, **caractérisé en ce que** l'induit (4) comporte sur son autre surface latérale de pentes en coin (14 ; 15) opposées, qui sont en interaction avec l'élément de signalisation d'erreur (5), dans lequel l'élément de signalisation d'erreur (5) est monté guidé dans sa direction de déplacement et possède deux pentes en coin (16 ; 17) complémentaires.

5. Indicateur de défauts selon l'une des revendications 1 à 5, **caractérisé en ce que** l'induit (4) est réalisé sous forme de corps pendulaire et est déplaçable aussi bien dans sa direction pendulaire que perpendiculairement à celle-ci.

6. Indicateur de défauts selon l'une des revendications précédentes, **caractérisé en ce que** l'induit possède, sur sa surface latérale dépourvue d'actionnement, des marquages qui sont visibles dans une fenêtre du système électronique selon le mouvement effectué par l'induit après déclenchement de l'un des dispositifs de protection contre les surintensités, de sorte qu'une détermination exacte des dommages pour ce qui concerne le dispositif de protection contre les surintensités respectif ou l'état du système électronique peut avoir lieu.

7. Indicateur de défauts selon la revendication 5 ou 6,
**caractérisé en ce que** l'induit (4) est maintenus par les pentes en coin complémentaires (16 ; 17) de l'élément de signalisation d'erreur (5) et à cet effet l'élément de signalisation d'erreur (5) est sous précontrainte mécanique.

8. Indicateur de défauts selon l'une des revendications précédentes, **caractérisé par** son utilisation dans des appareils de protection contre les surintensités multipolaires.
